(19) Europäisches Patentamt
European Patent Office
Office européen des brevets

(11) Publication number: **0 486 859 A1**

(12) # EUROPEAN PATENT APPLICATION

(21) Application number: **91118667.4**

(51) Int. Cl.$^5$: **G01N 15/02**

(22) Date of filing: **31.10.91**

(30) Priority: **17.11.90 JP 120547/90**

(43) Date of publication of application:
**27.05.92 Bulletin 92/22**

(84) Designated Contracting States:
**DE FR GB**

(71) Applicant: **HORIBA, LTD.**
**2 Miyanohigashi-machi Kissyoin**
**Minami-ku Kyoto(JP)**

(72) Inventor: **Igushi, Tatsuo**
**Ayanokoji-dori, Inokuma Higashi,**
**Shimogyo-ku**
**Kyoto(JP)**
Inventor: **Togawa, Yoshiaki**
**15-1-302, Asahi-cho, Katsuar, Nishikyo-ku**
**Kyoto(JP)**

(74) Representative: **TER MEER - MÜLLER -**
**STEINMEISTER & PARTNER**
**Mauerkircherstrasse 45**
**W-8000 München 80(DE)**

(54) **Apparatus for measuring a particle size distribution.**

(57) The monochrome beams (M) obtained from the lamp light (29) are changed over in wavelength ranging over several stages by the changed-over movement of the group of band pass filters (33) by means of the filter moving stage (35), whereby different ranges of particle sizes can be measured for the respective single wavelengths and thus the range of particle sizes capable of being measured can be expanded so much as that.

Fig. 1

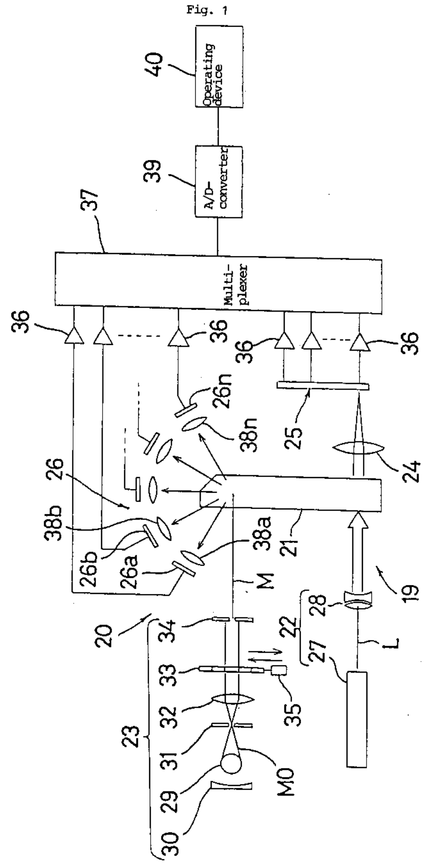


EP 0 486 859 A1

## BACKGROUND OF THE INVENTION

### Field of the Invention

The present invention relates to an apparatus for measuring a particle size distribution as claimed in the preamble of claim 1. Moreover, the invention relates to an apparatus in which said particle size distribution of sample particles is measured by utilizing a diffracting phenomenon or a scattering phenomenon brought about by irradiating dispersed particles with a light.

### Description of the Prior Art

In an apparatus for measuring a particle size distribution by utilizing a diffracting phenomenon or a scattering phenomenon of a light by particles, an intensity distribution of a diffracted light or a scattered light, in short a relation between a diffracted angle or a scattered angle and an optical intensity, is measured and it is subjected to an operation based on a theory of the Fraunhofer diffraction or the Mie scattering in order to calculate said particle size distribution or sample particles.

Fig. 5 is a diagram showing a measuring optical system of the conventional apparatus for measuring a particle size distribution.

Referring to Fig. 5, a sample cell 1 is a transparent vessel, in which a medium with sample particles dispersed therein is housed, and said sample cell 1 is irradiated with parallel laser beams L from an optical system 3 composed of a laser beam source 2 and the like.

Said laser beams L diffracted or scattered by sample particles within the sample cell 1 are received by a ring shaped detector 5 through one of collecting lenses 4a, 4b, 4c - - - selected to determine said particle size distribution of said sample particles from a measured optical intensity distribution of the laser beams L.

In the above described apparatus, in order to focus the diffracted or scattered laser beams L into an image on said ring-like detector 5, a plurality of condensed lenses 4a, 4b, 4c - - - different in focal distance are prepared and in a measurement of the sample particles having smaller particle diameters exhibiting larger scattering angles said condensed lens 4a having a short focal distance (f1) is used while also the ring shaped detector 5 is shifted to a position far from the condensed lens 4a. On the contrary, in the case where the sample particles having larger particle diameters exhibiting smaller scattering angles, said condensed lens 4c having a long focal distance (f3) is used while also the ring shaped detector 5 is shifted to a position close to the condensed lens 4c.

A plurality of condensed lenses 4a, 4b, 4c - - - different in focal distance are exchangedly used in the above described manner, so that the particle size distribution can be measured over a wide range of particle sizes, as shown in Fig. 6.

That is to say, referring to Fig. 6, a range A of particle sizes having smaller particle diameters is measured by the use of the condensed lens 4a having said short focal distance (f1), a range B of particle sizes having particle diameters larger than those in said range A by the use of said condensed lens 4b having a slightly longer focal distance (f2), and a range C of particle sizes having still larger particle diameters by the use of the condensed lens 4c having said still longer focal distance (f3), respectively.

However, the above described conventional apparatus for measuring a particle size distribution has a construction that the above described respective condensed lenses 4a, 4b, 4c - - - are changed over for every range of particle sizes corresponding to the respective condensed lenses 4a, 4b, 4c - - - and also the ring shaped detector 5 is shifted as occasion demands, in short said optical system is changed over for every each individual range of particle sizes to conduct a measurement, so that a problem has occurred in that in case of the sample particles extending over a plurality of ranges of particle sizes the optical system must be changed over many times and thus the particle size distribution can not be accurately measured.

In addition, samples to be measured are different in range of particle sizes, respectively, so that a problem has occurred also in that it is necessary to conduct the above described change-over of the optical system for every different sample and thus a measuring operation is troublesome.

## SUMMARY OF THE INVENTION

In view of the above described conventional disadvantages, it is an object of the present invention to provide an apparatus for measuring a particle size distribution capable of accurately and easily measuring said particle size distribution over a wide range of particle sizes without changing over an optical system.

In order to achieve the above described object, an apparatus for measuring a particle size distribution according to the present invention, in which said particle size distribution of sample particles is determined on the basis of the theory of the Fraunhofer diffraction or the Mie scattering from an intensity distribution of a diffracted light or a scattered light obtained by means of a larger diameter particle-detecting optical system comprising laser beam-emitting means for irradiating a sample vessel, in which a medium with sample particles dispersed therein is housed, with laser beams and a ring-like detector for measuring an optical intensity of said laser beams diffracted or scattered by said sample particles at the respective scattering angles and a smaller diameter particle-detecting optical system comprising single wavelength beam-emitting means for irradiating said sample vessel with monochrome beams obtained from a lamp light and a group of photosensors for measuring an optical intensity of said monochromated beams diffracted or scattered by the sample particles at the respective scattering angles, is characterized in that said monochrome beam-emitting means is provided with a filter group, in which a plurality of band pass filters for obtaining monochrome beams different in wavelength from said lamp light are arranged, and with a filter-moving means for moving said filter group so that said respective band pass filters may be changed over to an optical path of the lamp light, said group of photosensors being arranged so as to receive the diffracted light or the scattered light coming from the rear of the sample vessel to the front of the sample vessel, and data measured by means of the ring shaped detector and data measured by means of the group of photosensors being taken in by means of common data-putting in means.

According to the above described construction, an optical intensity distribution of the scattered light for the range of particle size having larger particle diameters is measured by means of the larger diameter particle-detecting optical system while an optical intensity distribution of the scattered light for the range of particle sizes having smaller particle diameters is measured by means of the smaller diameter particle-detecting optical system.

In addition, in the monochrome beam-emitting means in the smaller diameter particle-detecting optical system, the single wavelength beams obtained from the lamp light are changed over in wavelength over several stages by said changing-over movement of the group of band pass filters by means of said filter-moving means, so that measurements of different ranges of particle sizes are conducted for the monochrome beams having the respective wavelengths and thus the range of particle sizes, which can be measured, is expanded so much as that.

Furthermore, the group of photosensors in the smaller diameter particle-detecting optical system can receive beams having a wide range of scattering angle coming from the front of the sample vessel to the rear of the sample vessel, so that also the range of particle sizes capable of being measured by the respective single wavelength beams is expanded.

Moreover, the data measured by means of the larger diameter particle-detecting optical system and the data measured by means of the smaller diameter particle-detecting optical system are taken in as data for calculating the particle size distribution by means of said common data-putting in means, so that the particle size distribution over a wide range of particle sizes can he accurately measured at a single stroke without the changing-over operation of the optical system.

## BRIEF DESCRIPTION OF THE DRAWINGS

One preferred embodiment of the present invention is shown in Figs. 1 to 4, in which

Fig. 1 is a diagram showing a measuring optical system in an apparatus for measuring a particle size distribution according to the present invention;

Fig. 2 is a perspective view showing a ring shaped detector in said apparatus for measuring a particle size distribution shown in Fig. 1;

Fig. 3 is a plan view showing band pass filters in the apparatus for measuring a particle size distribution shown in Fig. 1; and

Fig. 4 is a diagram showing a range of particle size distribution capable of being measured by means of the apparatus for measuring a particle size distribution shown in Fig. 1.

The conventional example is shown in Figs. 5, 6, in which

Fig. 5 is a diagram showing a measuring optical system in the conventional apparatus for measuring a particle size distribution; and

Fig. 6 is a diagram showing a range of particle size distribution capable of being measured by the conventional apparatus for measuring a particle size distribution shown in Fig. 5.

## DESCRIPTION OF THE PREFERRED EMBODIMENT

The preferred embodiment of the present invention will be below described with reference to the drawings.

Fig. 1 is a diagram showing a measuring optical system in an apparatus for measuring a particle size distribution according to the present invention.

Referring to Fig. 1, a sample cell 21 is a transparent vessel, in which a sample liquid with sample particles dispersed therein is housed, and laser beam-emitting means 22 is an optical system for irradiating said sample cell 21 with parallel laser beams L.

Said laser beam-emitting means 22 is composed of a laser beam source 27 for emitting said parallel laser beams L, a beam-expander 28 for expanding the laser beams L in bundle of beams and the like.

A collecting lens 24 is arranged on an optical axis of the laser beam-emitting means 22 in front of the sample cell 21 for collecting the laser beams L diffracted or scattered by said sample particles on a ring shaped detector 25.

Said ring shaped detector 25 is arranged in front of said collecting lens 24 for receiving the laser beams having the respective scattering angles diffracted or scattered by the sample particles to measure their optical intensity distribution.

Fig. 2 is a perspective view showing a construction of the ring shaped detector 25. This ring shaped detector 25 is composed of a plurality of photosensors 25a, 25b, - - - 25n arranged so as to be divided in a ring shape with said optical axis P of the laser beam-emitting means 22 as a center for detecting the laser beams L diffracted or scattered by the sample particles at the respective angles depending upon particle diameters of the sample particles. Said respective photosensors 25a, 25b, - - - 25n of the ring shaped detector 25 are connected with a multiplexer 37 through amplifiers 36 - - - corresponding thereto.

The laser beam-emitting means 22, the collecting lens 24 and the ring shaped detector 25 compose a larger diameter particle-detecting optical system 19 for receiving the laser beams diffracted or scattered by the sample particles having relatively larger particle diameters.

On the other hand, single wavelength beam-emitting means 23 is an optical system for irradiating the sample cell 21 with single wavelength beams M having wavelengths shorter than those of the laser beams L and composed of a lamp light source 29, a spherical mirror 30, apertures 31, 34, a collimator lens 32, a group of band pass filters 33, a filter-moving stage 35 and the like.

Said spherical mirror 30 is a mirror for condensing a lamp light MO emitted backward from said lamp light source 29 on said aperture 31 arranged in front of the lamp light source 29. The aperture 31 contracts said lamp light MO front the lamp light source 29 to form a sufficiently small bundle of beams.

Said collimator lens 32 arranged in front of the aperture 31 is a lens for turning the lamp light, which has been contracted by means of the aperture 31, into parallel beams. Said group of band pass filters 33 arranged in front of the collimator lens 32 is a filter for taking out merely beams M having an appointed single wavelength from said parallel beams.

Fig. 3 is a plan view showing a construction of the group of band pass filters 33. The group of band pass filters 33 is composed of a plurality of for example 1/4 wavelength plates 33a, 33b - - - different in transmitting wavelength longitudinally arranged in turn from one having a short wavelength so that said single wavelength beams M taken out may be switched over to a plurality of stages in wavelength by driving said filter-moving stage 35 to shift a position of the group of band pass filters 33 up and down. In addition, a plurality of 1/4 wavelength plates 33a, 33b - - - may be for example arranged in a ring shape so that they may be changed over by rotating them by means of the filter-moving stage 35.

Said aperture 34 arranged in front of the group of band pass filters 33 aims at a contraction of a bundle of the single wavelength beams M from the group of band pass filter 33. The single wavelength beams M, which have passed through the aperture 34, are incident upon a position different from the incident position of the laser beams L of the sample cell 21.

In addition, a plurality of photosensors 26a, 26b, - - - 26n composing a group of photoensors 26 for individually detecting the single wavelength beams M diffracted or scattered by the sample particles are arranged at the respective scattering angle positions. In particular, here, said photosensors 26a, 26b, - - - 26n are arranged not only on the side in rear of the sample cell 21, in short the side on which the single wavelength-emitting means 23 is arranged, but also on the side in front of the sample cell 21 to measure an optical intensity also as for the single wavelength beams M scattered ahead the sample cell 21.

The respective photosensors 26a, 26b, - - - 26n receive the respective diffracted or scattered beams collected by means of condensed lenses 38a, 38b, - - - 38n corresponding thereto. The photosensors 26a, 26b, - - - 26n are connected with said multiplexer 37 through amplifiers 36 corresponding thereto.

The single wavelength-emitting means 23, said group of photosensors 26 and said condensed lenses 38a, 38b, - - - 38n compose a smaller diameter particle-detecting optical system 20 for receiving beams diffracted or scattered by the sample particles having relatively smaller particle diameters.

Said multiplexer 37 is a circuit having a function of taking in data of an optical intensity detected by means of the photosensors 25a, 25b, - - - 25n of the ring shaped detector 25 and the photosensors 26a, 26b, - - - 26n of the group of photosensors 26 in an appointed order and converting the taken-in data into series signals in the taking-in order to send them to an A/D convertor 39 on the following stage.

Said A/D convertor 39 is a circuit for converting the sent data of measurement, in short analog data, into digital data and said digital data are sent to an operating device 40 on the following stage.

Said operating device 40 is a device for conducting an operation of determining a particle size distribution of the sample particles within the sample cell 21 on the basis of the sent digital data about an optical intensity and composed of a computer and the like. This operation determines said particle size distibution on the basis of the theory of the Fraunhofer diffraction or the Mie scattering.

Fig. 4 is a diagram schematically showing a range of particle size of the particle size distribution capable of being measured by means of the above described apparatus for measuring a particle size distribution.

The measuring procedures of the particle size distribution in the apparatus for measuring a particle size distribution will be below described with reference also to Fig. 4.

In the optical system composing the laser beam-emitting means 22, the laser beams L from the laser light source 27 are expanded in bundle of beams by means the beam expander 28 and then incident upon the sample cell 21.

The laser beams L are diffracted or scattered by the sample particles within the sample cell 21 and the diffracted beams or the scattered beams are focused into an image on the ring shaped detector 25 by means of the condensed lens 24. detector 25.

An optical intensity of the laser beams L diffracted or scattered by the sample particles is measured by means of the respective photosensors 25a, 25b, - - - 25n arranged in the ring-like detector 25. Of the respective photosensors 25a, 25b, - - - 25n, the photosensors on the outer circumferential side receive the laser beams L scattered at larger scattering angles while the photosensors on the inner circumferential side receive the laser beams L scattered at smaller scattering angles. Accordingly, said optical intensity detected by means of the photosensors on the outer circumferential side reflects a quantity of the sample particles having larger particle diameters while said optical intensity detected by means of the photosensors on the inner circumferential side reflects a quantity of the sample particles having smaller particle diameters. The optical intensities detected by means of the respective photosensors 25a, 25b, - - - 25n are converted into analog electric signals and put into the multiplexer 37 through the amplifiers 36.

On the other hand, in the optical system composing the monochrome beam-emitting means 23, the lamp light MO from the lamp light source 29 is turned into parallel beams by means of the collimator lens 32 through the aperture 31 and said parallel beams are turned into the single wavelength beams M by means of the group of band pass filters 33. In addition, the monochrome beams M are contracted in bundle of beams by means of the aperture 34 and then incident upon the sample cell 21.

The single wavelength beams M are diffracted or scattered by the sample particles within the sample cell 21 and the scattered beams are collected by means of the respective corresponding photosensors 26a, 26b, - - - 26n through the respective condensed lenses 38a, 38b, - - - 38n followed by measuring the optical intensity distribution by means of the group of photosensors 26.

In the group of photosensors 26, the photosensors arranged closer to the rear of the sample cell 21 receive the single wavelength beams M having larger scattering angles while the photosensors arranged closer to the front of the sample cell 21 receive the monochrome beams M having smaller scattering angles. Accordingly, an optical intensity detected by means of the photosensors arranged in the rear of the sample cell 21 reflects the quantity of the sample particles having smaller particle diameters while an optical intensity detected by means of the photosensors arranged in the front of the sample cell 21 reflects the quantity of the sample particles having larger particle diameters. The optical intensities detected by means of the respective photosensors 26a, 26b, - - - 26n are converted into analog electric signals and put in the multiplexer 37 through the amplifiers 36. Since the wavelength range of the lamp light source 29 is previously selected so as to be shorter than the wavelength of the laser beams L, as above described, the diffracted or scattered single wavelength beams M are effective for the determination of the particle size distribution of the sample particles having smaller particle diameters. On the other hand, the diffracted or scattered laser beams L are effective for the detemination of the particle size distribution of the sample particles having larger partcile diameters.

Thus, the optical intensity distribution measured by means of the ring shaped detector 25 of the larger diameter particle-detecting optical system 19 using the laser beams L having wavelengths longer than those of the lamp light MO becomes data corresponding to a range of particle sizes W having larger particle diameters shown in Fig. 4. In addition, the optical intensity distribution measured by means of the group of photosensors 26 of the smaller diameter particle-detecting optical system 20 using the lamp light MO having wavelengths shorter than those of the laser beams L becomes data corresponding to a range of particle sizes N having smaller particle diameters shown in Fig. 4

The data of measurement, in short analog electric signals, sent from the respective photosensors 25a, 25b, - - - 25n, 26a, 26b, - - - 26n are taken into the multiplexer 37 in the appointed order. That is to say, for example, the data of measurement are taken in in the order from the photosensors 26a, 26b, - - - corresponding to the sample particles having smaller particle diameters to the photosensors 25a, 25b, - - - corrseponding to the sample particles having larger particle diameters.

In addition, in the single wavelength beam-emitting means 23, the taken-out single wavelength beams M are changed in wavelength step by step from short wavelengths to long wavelengths every time when the position of the group of band pass filters 33 is changed over in turn by means of the filter-moving stage 35. As a result, also the optical intensity distribution measured by means of the group of photosensors 26 is correspondingly changed over step by step from the data corresponding to the range of particle sizes having smaller particle diameters N1 to the data corresponding to the range of particle sizes having larger particle diameters N2.

In the case where the data measured by means of the group of photosensors 26 are taken into the multiplexer 37, said taking-in cycle from the photosensor 26a to the photosensor 26n is repeated in synchronization with the change-over of the group of band pass filters 33 by means of the filter-moving stage 35. Accordingly, the data of the ranges of particle sizes N1, N2 - - - ranging over several stages can be obtained as the data measured by means of the smaller diameter particle-detecting optical system 20.

The analog electric signals taken into the multiplexer 37 are turned into series signals and then converted into digital signals in turn in the A/D convertor 39 on the following stage followed by being put in the operating device 40 on the following stage.

In the operating device 40, the particle size distribution of the sample particles is determined on the basis of the data of optical intensity measured by means of the ring shaped detector 25 and the group of photosensors 26 at the respective scattering angles. This calculating procedure is conducted on the basis of the theory of the Fraunhofer diffraction or the Mie scattering.

According to the present invention having the above described construction, the optical intensity distribution of the scattered beams in the range of particle sizes having larger particle diameters is measured by means of the larger diameter particle-detecting optical system while the optical intensity distribution of the scattered beams in the range of particle sizes having smaller diameter particles is measured by means of the smaller diameter particle-detecting optical system, in the single wavelength beam-emitting means in the smaller diameter particle-detecting optical system the monochrome beams obtained from the lamp light being changed over in wavelength ranging over several stages by the changed-over movement of the group of band pass filters by means of the filter-moving stage, and the group of photosensors in the smaller diameter particle-detecting optical system being arranged so as to receive the beams having a wide range of scattering angle coming from the front of the sample vessel to the rear of the sample vessel, so that an effect occurs in that the particle size distribution can be measured ranging over a wide range of particle sizes.

Moreover, the data measured by means of the larger diameter particle-detecting optical system and the smaller diameter particle-detecting optical system are taken in by means of the common data-putting in means to be used as the data for calculating the particle size distribution, so that an effect occurs also in that the particle size distribution ranging over a wide range of particle sizes can be accurately measured at a single stroke without changing over the optical system.

## Claims

1. An apparatus for measuring a particle size distribution, in which said particle size distribution of sample particles is determined on the basis of the theory of the Fraunhofer diffraction or the Mie scattering from an intensity distribution of a diffracted light or a scattered light obtained by means of a larger diameter particle-detecting optical system (19) comprising laser beam-emitting means (22) for irradiating a sample vessel (21), in which a medium with sample particles dispersed therein is housed, with laser beams (L) and a ring-like detector (25) for measuring an optical intensity of said laser beams (L) diffracted or scattered by said sample particles at the respective scattering angles and a smaller diameter particle-detecting optical system (20) comprising monochrome beam-emitting means (23) for irradiating said sample vessel (21) with single wavelength beams (M) obtained from a lamp light (MO) and a group of photosensors (26a - 26n) for measuring an optical intensity of said single wavelength beams (M) diffracted or scattered by the sample particles at the respective scattering angles, **characterized in that** said monochrome beam-emitting means (23) is provided with a filter group (33), in which a plurality of band pass filters (33a, 33b ...) for obtaining single wavelength beams different in wavelength from said lamp light are arranged, and with a filter-moving means (35) for moving said filter group (33) so that said respective band pass filters (33a, 33b, ...) may be changed over to an optical path of the lamp light, said group of photosensors (26a, ..., 26n) being arranged so as to receive the diffracted light or the scattered light coming from the rear of the sample vessel (21) to the front of the sample vessel (21), and data measured by means of the ring shaped detector (25) and data measured by means of the group of photosensors (26a, ..., 26n) being taken in by means of common data-putting in means (37).

2. The apparatus as claimed in claim 1, **characterized in that** the band pass filters (33a, 33b, ...) of the filter group (33) are arranged in parallel relationship side by side and are to be shifted by said filter-moving means (35) perpendicular to its longitudinal direction.

3. The apparatus as claimed in claim 1, **characterized in that** the band pass filters (33a, 33b, ...) of the filter group (33) are arranged in a ring shape so that they may be changed over by rotating them by means of said filter-moving means (35).

4. The apparatus as claimed in one of the claims 1 to 3, **characterized in that** the filter group (33) is positioned between a collimator lens (32) for turning the lamp light (MO) into parallel beams and an aperature (34).

5. The apparatus as claimed in one of the claims 1 to 4, **characterized in that** the data-putting in means (37) is a multiplexer.

6. The apparatus as claimed in one of the claims 1 to 5, **characterized in that** in case where the data are measured by means of said monochrome beam-emitting means (23) the filter-moving means (35) and the data-putting in means (37) are controlled by a control means such that the taking-in cycle with respect to all of the photosensors (26a, 26b, ...) is repeated in synchronisation with the change-over of the band pass filters (33a, 33b, ...)

Fig. 1

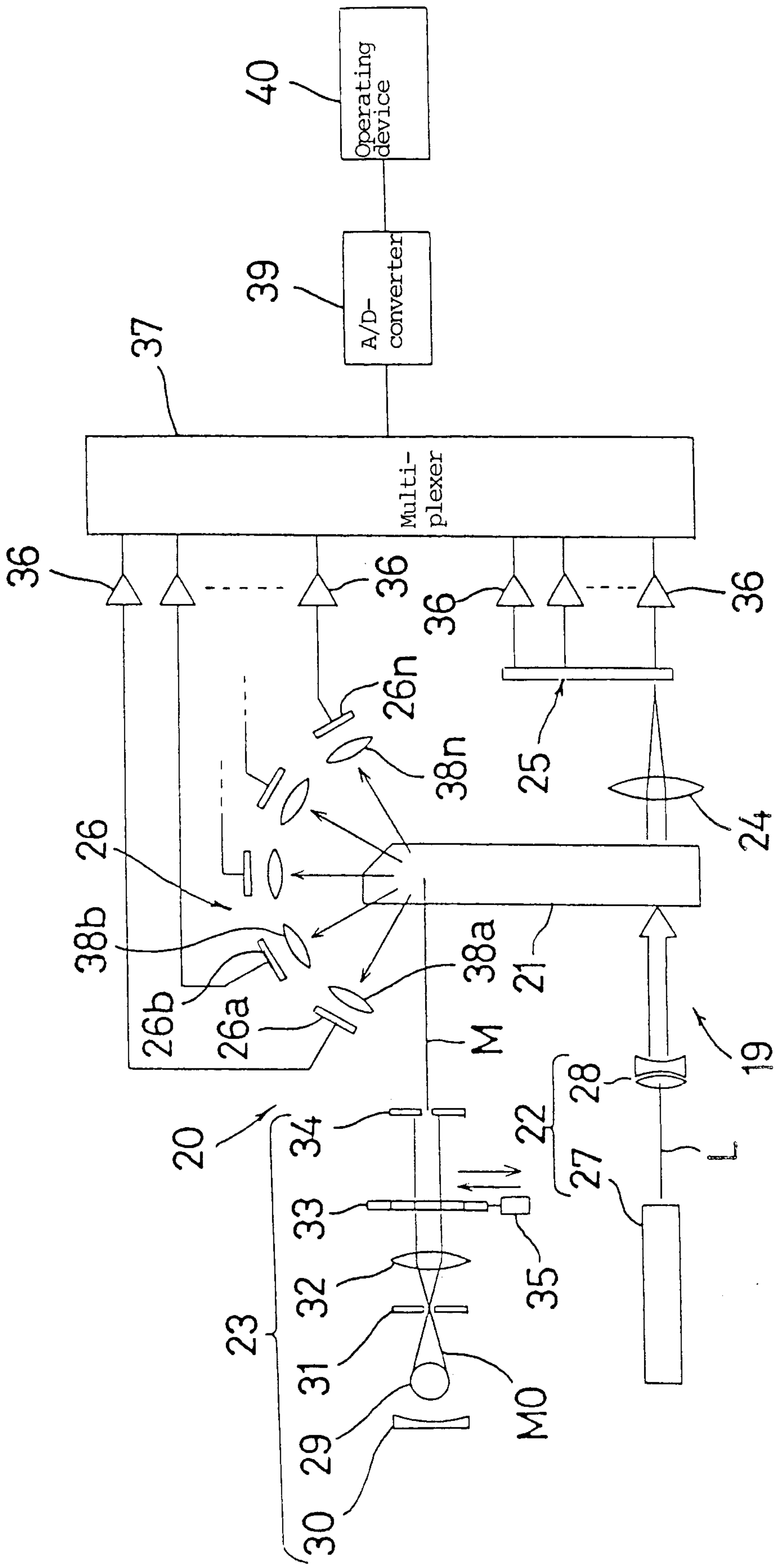
Operating device
A/D-converter
Multi-plexer
40
39
37
36
26n
38n
25
24
26
38b
26b
26a
38a
21
M
19
20
34
33
35
32
31
23
28
22
27
L
29
30
MO

Fig.2

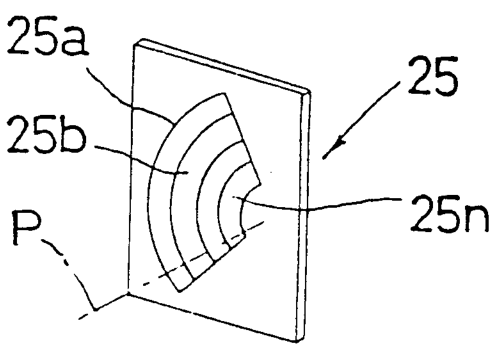


Fig.3

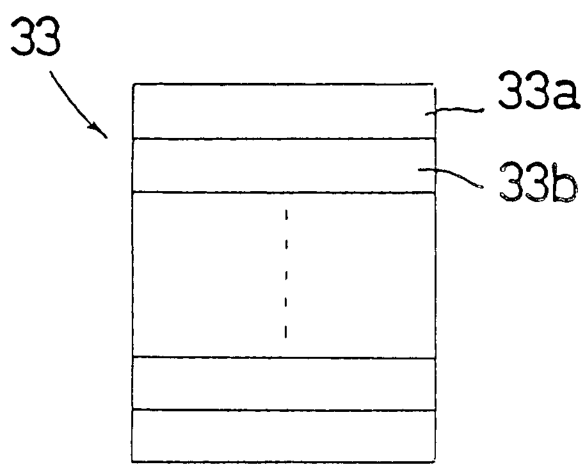

Fig. 4

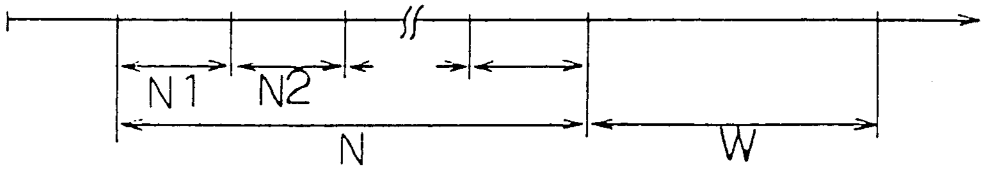


Fig. 5 (Prior Art)

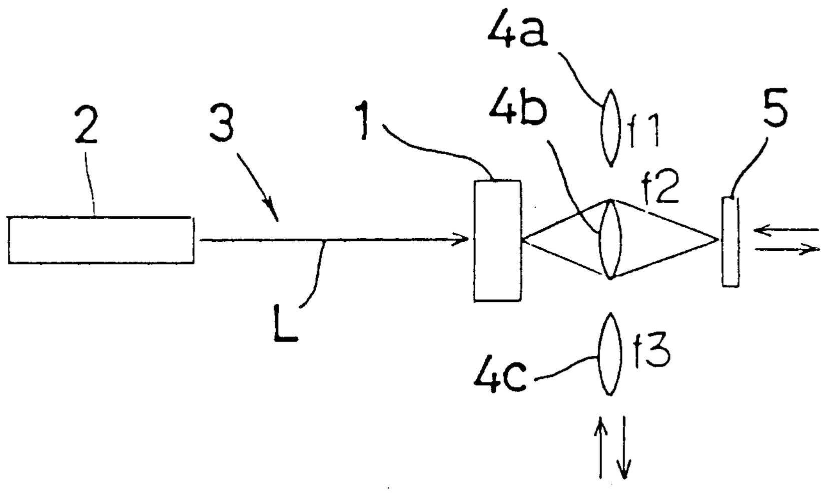


Fig. 6

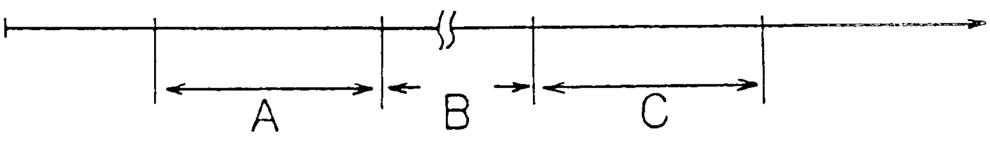

European Patent Office

# EUROPEAN SEARCH REPORT

Application Number

EP 91 11 8667

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,A | EP-A-0 434 352 (SHIMADZU CORP.) * the whole document * | 1 | G 01 N 15/02 |
| A | US-A-4 361 403 (H.G.LOOS) * claims 29-34; figures 9,10 * | 1-3 | |
| A | JOURNAL OF PHYSICS E. SCIENTIFIC INSTRUMENTS. vol. 21, no. 4, April 1988, BRISTOL GB pages 378 - 383; R.R. STEEPER ET AL.: 'Using Mie scattering for measuring size changes of individual particles' * figure 1 * | 1 | |
| A | APPLIED OPTICS. vol. 29, no. 31, 1 November 1990, NEW YORK US pages 4563 - 4573; B.H. MILES ET AL.: 'Malvern particle size measurements in media with time varying index of refraction gradients' * figure 1 * | 1 | TECHNICAL FIELDS SEARCHED (Int. Cl.5) |
| A | WO-A-9 010 216 (COULTER ELECTRONICS OF NEW ENGLAND INC.) * page 1 - page 3 * | 1 | G 01 N |
| A | EP-A-0 300 875 (O.N.E.R.A.) * abstract * @ page 2 * | 1 | |

The present search report has been drawn up for all claims

| Place of search | Date of completion of the search | Examiner |
|---|---|---|
| BERLIN | 21-02-1992 | BRISON O.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)